(19) **Europäisches Patentamt**

**European Patent Office**

**Office européen des brevets**

(11) **EP 0 975 831 B1**

(12) **EUROPÄISCHE PATENTSCHRIFT**

(45) Veröffentlichungstag und Bekanntmachung des Hinweises auf die Patenterteilung:
**20.12.2000 Patentblatt 2000/51**

(51) Int Cl.⁷: **D06N 3/04**, D06M 15/227, D06M 15/333, D06M 15/233, D06M 15/263

(21) Anmeldenummer: **98920507.5**

(22) Anmeldetag: **09.04.1998**

(86) Internationale Anmeldenummer: **PCT/EP98/02089**

(87) Internationale Veröffentlichungsnummer: **WO 98/48099 (29.10.1998 Gazette 1998/43)**

(54) **VERWENDUNG EINES HARTEN UND HYDROPHOBEN BINDE- UND BESCHICHTUNGSMITTELS FÜR TEXTILE FLÄCHENGEBILDE IM DACHBAHNENBEREICH**

USE OF HARD, HYDROPHOBIC BINDING AND COATING MEDIUM FOR FLAT TEXTILE STRUCTURES FOR ROOFING APPLICATIONS

UTILISATION D'UN MILIEU DUR ET HYDROPHOBE DE LIAISON ET D'ENDUCTION POUR STRUCTURES TEXTILES PLATES POUR LE DOMAINE DE LA TOITURE

(84) Benannte Vertragsstaaten:
**DE IT**

(30) Priorität: **18.04.1997 DE 19716352**

(43) Veröffentlichungstag der Anmeldung:
**02.02.2000 Patentblatt 2000/05**

(73) Patentinhaber: **Wacker-Chemie GmbH 81737 München (DE)**

(72) Erfinder:
• **KOHLHAMMER, Klaus**
**D-84533 Marktl (DE)**
• **KOEGLER, Gerhard**
**D-84508 Hirten (DE)**
• **DOBLER, Walter**
**D-84367 Tann (DE)**

(74) Vertreter: **Schuderer, Michael, Dr. et al Wacker-Chemie GmbH Zentralabteilung Patente Marken und Lizenzen Hanns-Seidel-Platz 4 81737 München (DE)**

(56) Entgegenhaltungen:
EP-A- 0 306 716      EP-A- 0 358 007
EP-A- 0 581 264      EP-A- 0 731 207
WO-A-96/08597        WO-A-98/06888
US-A- 4 044 197      US-A- 4 683 165

**Beschreibung**

Die Erfindung betrifft die Verwendung einer Polymerzusammensetzung von Vinylacetat-Ethylen-Copolymer und Styrol-Acrylsäure-Copolymer als hartes und hydrophobes Binde- und Beschichtungsmittel für textile Flächengebilde, welche im Dachbahnenbereich zur Anwendung kommen.

Für die Ausrüstung von textilen Flächengebilden, beispielsweise von Spinnvliesen aus Polyesterfaser oder Glasfaservliese, in der Anwendung als Trägermaterial in Dachbahnen, ist es erforderlich, daß das Bindemittel dem Textil einen wasserabweisenden (hydrophoben) Charakter verleiht und das damit gebundene Textil bei thermischer Belastung eine hohe Reißfestigkeit bei möglichst geringer Dehnung besitzt. Wegen der hohen thermischen Belastung, der das Trägermaterial speziell bei der Anwendung in Dachbahnen ausgesetzt ist, wird auch ein thermoelastisches Verhalten (geringe Wärmedehnung) der gebundenen Textilien erwünscht.

Aus der EP-A-731207 sind formaldehydarme Bindemittel für textile Flächengebilde auf Basis von Vinylacetat und Versaticsäurevinylester (VeoVa9R und VeoVa10R, Handelsnamen der Fa. Shell) mit vernetzbaren Gruppen bekannt. Offensichtlich bewirkt der Einsatz dieser hydrophoben Versaticsäurevinylester eine gewisse wasserabweisende Wirkung in der Beschichtung. Zur Reduzierung der Formaldehydfreisetzung sind in diesen Vinylester-Copolymerisaten die N-Methylol-funktionellen Comonomere ganz oder teilweise durch Vinylsilan ersetzt. Die damit gebundenen Vliese werden auch zur Anwendung als Dachbahnenbeschichtungsmittel empfohlen. Das derzeit gewünschte Anforderungsprofil für Trägermaterialien für Dachbahnen, nämlich eine hohe Hydrophobie, hohe Reißfestigkeit kann damit erreicht werden. Nachteilig bei diesen Copolymeren ist der relativ hohe Preis der Versaticsäurevinylester.

In der US-A-4683165 und der EP-A-358007 sind zweistufige, hitzebeständige Bindemittel für Textilien beschrieben, bei denen in der ersten Stufe ein Ethylen-Vinylacetat-Polymerisat mit vorvernetzenden und nachvernetzenden Comonomer-Einheiten hergestellt wird, welches in der zweiten Stufe mit Styrol oder Methylmethacrylat im Gemisch mit vorvernetzenden und nachvernetzenden Comonomeren gepfropft wird. Entscheidend ist dabei offensichtlich der Aufbau einer IPN-Struktur (Interpenetrated Polymer Network), wobei das Polymer der ersten Stufe eine Netzwerkstruktur bildet, welche vom Polymer der zweiten Stufe durchdrungen wird, und die IPN-Struktur mittels der vor- und nachvernetzenden Einheiten fixiert wird. Nachteilig ist, daß durch die Verwendung von vorvernetzenden Comonomeren die Filmbildung beim Einsatz als Bindemittel erschwert wird, wodurch die Festigkeit reduziert wird. Eine Verwendung in Filzen wird ebenfalls erwähnt.

Aus der EP-A-581264 ist bekannt, daß sich mittels Copolymerisation von Styrol oder Acrylsäureestern mit Acrylsäure oder Maleinsäureanhydrid in Gegenwart von Vinylacetat-Ethylen-Copolymeren Polymermischungen mit guter Verträglichkeit herstellen lassen. Die Polymermischungen werden als Bindemittel für Beschichtungen, Klebemittel und Dichtungsmassen empfohlen.

Der Erfindung lag die Aufgabe zugrunde, Bindemittel für textile Flächengebilde zur Verfügung zu stellen, welche neben hoher Reißfestigkeit und geringer Wärmedehnung auch eine ausreichend hohe Hydrophobie für deren Anwendung im Dachbahnenbereich aufweisen. Überraschenderweise wurde gefunden, daß sich diese Eigenschaftskombination, und speziell eine hohe wasserabweisende Wirkung, mit einer Polymerzusammensetzung erreichen läßt, welche hohe Anteile an äußerst hydrophiler Acrylsäure enthält.

Gegenstand der Erfindung ist die Verwendung einer verträglichen Polymerzusammensetzung als Binde- und Beschichtungsmittel für textile Flächengebilde, welche im Dachbahnenbereich zur Anwendung kommen, dadurch gekennzeichnet, daß die Polymerkombination zusammengesetzt ist aus

a) 30 bis 95 Gew% eines Vinylacetat-Ethylen-Copolymers mit 5 bis 40 Gew% Ethylen und 0 bis 15 Gew% einer oder mehrerer Comonomereinheiten aus der Gruppe der ethylenisch ungesättigten hydrolisierbaren Silane, der N-Methylol(meth)acrylamide und deren N-(Alkoxymethyl)- und (N-Acyloxymethyl)-Derivate, der ethylenisch ungesättigten Carbonsäuren und Sulfonsäuren und deren Derivate, jeweils bezogen auf das Gesamtgewicht des Vinylacetat-Ethylen-Copolymers, und
b) 5 bis 70 Gew% eines Styrol-Acrylsäure-Copolymers mit 5 bis 35 Gew% Acrylsäure und 0 bis 15 Gew% einer oder mehrerer Comonomereinheiten aus der Gruppe der N-Methylol(meth)acrylamide und deren N-(Alkoxymethyl)- und (N-Acyloxymethyl)-Derivate, der ethylenisch ungesättigten Carbonsäurederivate und der ethylenisch ungesättigten Sulfonsäuren und deren Derivate, jeweils bezogen auf das Gesamtgewicht des Styrol-Acrylsäure-Copolymers,

wobei sich die Anteile von a) und b) auf 100 Gew% aufaddieren.

Vorzugsweise enthält die verträgliche Polymerzusammensetzung 45 bis 70 Gew% des Vinylacetat-Ethylen-Copolymers a) und 30 bis 55 Gew% des Styrol-Acrylsäure-Copolymers b).

Der Ethylengehalt des Vinylacetat-Ethylen-Copolymers a) beträgt vorzugsweise 15 bis 35 Gew%, bezogen auf das Gesamtgewicht von a). Das Vinylacetat-Ethylen-Copolymere a) kann gegebenenfalls noch geringe Mengen von bis zu 10 Gew% ein oder mehrere weitere Comonomere aufweisen, beispielsweise Acrylsäureester wie n-Butylacrylat.

Der Acrylsäure-Gehalt des Styrol-Acrylsäure-Copolymers b) beträgt vorzugsweise 5 bis 20 Gew%, bezogen auf das Gesamtgewicht von b).

Beispiele für ethylenisch ungesättigte, hydrolisierbare Silane sind gamma-Acryl- und gamma-Methacryloxypropyltrialkoxysilane und Vinyltrialkoxysilane, wobei als Alkoxygruppen beispielsweise Methoxy-, Ethoxy-, Methoxyethylen-, Ethoxyethylen-, Methoxypropylenglykolether-,Ethoxypropylenglykolether-Reste eingesetzt werden können. Weiterhin ist das Trisacetoxyvinylsilan verwendbar. Bevorzugt werden Vinyltriethoxysilan, gamma-Methacryloxypropyltriethoxysilan und Trisacetoxyvinylsilan. Die ethylenisch ungesättigten, hydrolisierbaren Silane werden vorzugsweise in einer Menge von 0.5 bis 5 Gew%, bezogen auf das Gesamtgewicht des Copolymers a), copolymerisiert. Es können auch Gemische der genannten Silane copolymerisiert werden.

Bevorzugte N-Methylol(meth)acrylamide und deren N-(Alkoxymethyl)- und (N-Acyloxymethyl)-Derivate sind N-Methylolacrylamid, N-Methylolmethacrylamid, N-(Isobutoxymethyl)acrylamid, N-(n-Butoxymethyl)acrylamid. Die N-Methylol(meth)acrylamide und deren Derivate werden vorzugsweise in einer Menge von 0.5 bis 5.0 Gew%, bezogen auf das Gesamtgewicht des Copolymers a) oder b), copolymerisiert. Es können auch Gemische der genannten N-Methylol-Verbindungen bzw. deren Derivate copolymerisiert werden.

Beispiele für ethylenisch ungesättigte Carbonsäuren und Sulfonsäuren sind Acrylsäure, Methacrylsäure, 2-Acrylamidopropansulfonsäure, Vinylsulfonsäure. Beispiele für deren Derivate sind Acrylamid und Methacrylamid.

Besonders bevorzugt werden verträgliche Polymerzusammensetzungen aus einem Vinylacetat-Ethylen-Copolymer a) mit 15 bis 35 Gew% Ethylen, 0.5 bis 5 Gew% eines oder mehrerer ethylenisch ungesättigter hydrolisierbarer Silane, 0.5 bis 5 Gew% eines oder mehrerer N-Methylol(meth)acrylamide oder deren Derivate, wobei die Anteile in Gew% jeweils auf das Gesamtgewicht des Copolymer a) bezogen sind, und aus einem Styrol-Acrylsäure-Copolymer b) mit 5 bis 20 Gew% Acrylsäure und 0.5 bis 5 Gew% eines oder mehrerer N-Methylol(meth)acrylamide oder deren Derivate, wobei die Anteile in Gew% jeweils auf das Gesamtgewicht des Copolymer b) bezogen sind.

Die Herstellung der Copolymeren a) und b) kann getrennt nach dem Emulsionspolymerisationsverfahren in wässriger Phase erfolgen. Die Polymerzusammensetzung wird dann durch Mischen der Copolymeren a) und b) hergestellt. Vorzugsweise wird so vorgegangen, daß in einer ersten Stufe das Vinylacetat-Ethylen-Copolymer a) polymerisiert wird, und in einer zweiten Stufe das Styrol-Acrylsäure-Copolymer b) in Gegenwart des Copolymers a) polymerisiert wird.

Die Polymerisation wird üblicherweise in einem Temperaturbereich von 20°C bis 95°C durchgeführt und mit den für die Emulsionspolymerisation üblicherweise eingesetzten Methoden eingeleitet. Bei der Copolymerisation mit Ethylen wird vorzugsweise bei einem Druck von 1-10 MPa (10 bis 100 bar) abs. gearbeitet. Die Initiierung erfolgt mittels der üblichen wasserlöslichen Radikalbildner, die vorzugsweise in Mengen von 0.01 bis 1.0 Gew%, bezogen auf das Gesamtgewicht der Monomeren, eingesetzt werden. Beispiele hierfür sind Ammonium- und Kaliumpersulfat, Alkylhydroperoxide, wie tert.-Butylhydroperoxid, Wasserstoffperoxid. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Formaldehydsulfoxylat-Salze, Natriumbisulfit oder Ascorbinsäure. Bei der Redoxinitiierung werden dabei vorzugsweise eine oder beide Redox-Katalysatorkomponenten während der Polymerisation dosiert.

Als Emulgatoren werden die üblicherweise bei der Emulsionspolymerisation verwendeten Emulgatoren eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxid-Einheiten.

Der für die Polymerisation gewünschte pH-Bereich, der im allgemeinen zwischen 2 und 8 liegt, kann in bekannter Weise durch Säuren, Basen oder übliche Puffersalze, wie Alkaliphosphate, Alkaliacetate oder Alkalicarbonate, eingestellt werden.

Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente.

Der Feststoffgehalt der wässrigen Dispersionen beträgt vorzugsweise 30 bis 70 Gew%. Die Polymerzusammensetzung kann in Form deren wässrigen Dispersionen oder als Pulver verwendet werden. Zur Herstellung der Pulver werden die Dispersionen getrocknet, vorzugsweise sprühgetrocknet, oder koaguliert und anschließend wirbelschichtgetrocknet, oder gefriergetrocknet, besonders bevorzugt sprühgetrocknet. Hierbei kann auf die bekannten Vorrichtungen, wie zum Beispiel Versprühen durch Mehrstoffdüsen oder mit der Scheibe, in einem gegebenenfalls erhitzten Trockengasstrom, zurückgegriffen werden. Im allgemeinen werden Temperaturen über 250°C nicht angewandt. Die optimale Temperatur des Trockengases kann in wenigen Versuchen ermittelt werden; oft haben sich Temperaturen über 60°C besonders bewährt.

Zur Erhöhung der Lagerfähigkeit und um zum Beispiel bei Pulvern mit niederer Glasübergangstemperatur $T_g$ ein Verbacken und Verblocken zu verhindern, wird bei der Sprühtrocknung gegebenenfalls Antiblockmittel, beispielsweise Aluminiumsilikate, Kieselgur, Calciumcarbonat, zugegeben. Des weiteren können gegebenenfalls noch Entschäumer, beispielsweise auf Silikon- oder Kohlenwasserstoffbasis, oder Verdüsungshilfen, beispielsweise Polyvinylalkohole oder wasserlösliche Melamin-Formaldehyd-Kondensationsprodukte, der Dispersion zugegeben werden.

Die wässrigen Dispersionen bzw. die Pulver der Polymerzusammensetzung eignen sich zur Bindung und Beschichtung von textilen Flächengebilden aus Fasern oder Garnen, Gewirren oder Gelegen auf der Basis von natürlichen oder synthetischen Fasermaterialien. Bevorzugt werden Polyesterfaser, Zellwollfaser und Glasfaser. Besonders bevorzugt werden Polyesterspinnvliese, Zellwollvliese und Glasfaservliese.

Vor der Bindung oder Beschichtung werden die Fasern flächenhaft ausgebreitet. Die Verfahren hierzu sind bekannt und primär von der Anwendung, in die das Fasermaterial geht, abhängig. Die Fasern können mittels einer Luftlege-, Naßlege-, Direktspinn- oder Krempelvorrichtung ausgelegt werden. Gegebenenfalls können die Flächengebilde vor der Verfestigung mit Bindemittel noch mechanisch verfestigt werden, beispielsweise durch Kreuzlegen, Nadeln oder Wasserstrahlverfestigung.

Die wässrigen Dispersionen werden in üblicher Weise durch Imprägnieren, Schaumimprägnieren, Sprühen, Pflatschen, Streichen, Tauchen oder Bedrucken aufgetragen. Gegebenenfalls nach Abtrennen des überschüssigen Bindemittels durch beispielsweise Abquetschen, werden die textilen Gebilde bei Temperaturen von 80°C bis 240°C, vorzugsweise zwischen 120°C und 180°C, getrocknet. Je nach Anwendungsbereich liegt die für die Verfestigung des Fasermaterials notwendige Menge an Polymerzusammensetzung zwischen 5 und 50 Gew% ,vorzugsweise 10 bis 30 Gew% Bindemittel, bezogen auf das Fasergewicht.

Wird die Polymerzusammensetzung in Pulverform verwendet, wird das Pulver in an sich bekannter Weise auf das, gegebenenfalls mechanisch vorverfestigte, Fasermaterial aufgestreut, eingestreut (beispielsweise bei Krempelwatten), eingerüttelt oder direkt mit der Faser vermischt. Die textilen Gebilde werden bei Temperaturen von 80°C bis 240°C, vorzugsweise zwischen 120°C und 180°C, getrocknet. Je nach Anwendungsbereich liegt die für die Verfestigung des Fasermaterials notwendige Menge zwischen 5 und 50 Gew% Polymerzusammensetzung, bezogen auf das Fasergewicht.

Zu der Polymerzusammensetzung können noch Pigmente, Antioxidantien, Farbstoffe, Weichmacher, Filmbildehilfsmittel, Füllstoffe, Flammschutzmittel, Schaumbildehilfsmittel, Schauminhibitoren, Netzmittel, Thermosensibilisierungsmittel, Antistatika, Biozide, Griffverbesserungsmittel, zusätzliche Vernetzer oder Katalysatoren zur eventuell notwendigen Beschleunigung der Vernetzungsreaktion in dazu üblichen Mengen zugegeben werden.

Die nachfolgenden Beispiele dienen zur weiteren Erläuterung der Erfindung:

Herstellung der Vinyacetat-Ethylen-Copolymerdispersionen:

Beispiel 1:

In einem Druckreaktor wurden 3.1 kg Wasser, 19.3 g einer 25 %-igen wässrigen Vinylsulfonat-Lösung, 75 g einer 20 %-igen Lösung eines Ethylenoxid-Propylenoxid-Blockcopolymers und 8 g einer 30 %-igen Diisohexylsulfosuccinat-Lösung zusammen mit 51.5 g Butylacrylat und 443 g Vinylacetat vorgelegt. Es wurde auf 50°C aufgeheizt und Ethylen mit einem Druck von 7,5 MPa (75 bar) aufgepreßt. Nach Erreichen des Temperaturgleichgewichts wurden 1370 g einer 5 %-igen wässrigen Lösung von Ammoniumpersulfat und 1370 g einer 2.5 %-igen wässrigen Lösung von Ascorbinsäure zudosiert. Nach Auspolymerisation der Vorlage wurden ein Gemisch aus 5320 g Vinylacetat und 271 g Butylacrylat sowie eine Voremulsion aus 1400 g Wasser, 483 g einer 40 %-igen Lösung eines Isotridecylethoxylats mit 15 EO-Einheiten, 402 g einer 48 %-igen wässrigen N-Methylolacrylamid-Lösung, 58 g Acrylsäure und 155 g Vinyltriethoxysilan zudosiert.

Nach Beendigung der Polymerisation resultierte eine Dispersion mit einem Feststoffgehalt von 51.1 Gew% eines Copolymers mit 64 Gew% Vinylacetat, 32.2 Gew% Ethylen, 2.1 Gew% N-Methylolacrylamid und 1.7 Gew% Vinyltriethoxysilan.

Beispiel 2:

Es wurde analog Beispiel 1 vorgegangen, mit dem Unterschied, daß zusätzlich noch 46 g einer 85 %-igen wässrigen Lösung von N-(Isobutoxymethyl)-acrylamid mit der Voremulsion zudosiert wurden. Nach Beendigung der Polymerisation resultierte eine Dispersion mit einem Feststoffgehalt von 52.2 Gew% eines Copolymers mit 66.4 Gew% Vinylacetat, 29.1 Gew% Ethylen, 2.2 Gew% N-Methylolacrylamid, 0.5 Gew% N-(Isobutoxymethyl)-acrylamid und 1.8 Gew% Vinyltriethoxysilan.

Herstellung der Polymerzusammensetzung:

Beispiel 3:

In einem Polymerisationsgefäß wurden 140 g Wasser und 1124 g der Polymerdispersion aus Beispiel 1 vorgelegt. Die Vorlage wurde unter Rühren auf 70°C aufgeheizt. Nach Erreichen der Polymerisationstemperatur wurde über einen Zeitraum von 5 Stunden ein Gemisch aus 213 g Wasser, 217.5 g Styrol, 38.5 g Acrylsäure, 15.3 g einer 28 %-igen Lösung eines sulfatisierten Alkylethoxylats mit 3 EO-Einheiten, 1 g t-Butylperneohexanoat und 3.4 g einer 75 %-igen Lösung von t-Butylperpivalat zudosiert. Die Daten zu der damit erhaltenen Polymerdispersion sind in Tabelle 1 aufgeführt.

Beispiel 4 bis 8, Vergleichsbeispiele 1 bis 4:

Bei der Herstellung der Polymerzusammensetzung gemäß den Beispielen 4 bis 8 und der Vergleichsbeispiele 1 bis 4 wurde analog Beispiel 3 vorgegangen.
Art und Menge der dabei verwendeten Vorlage bzw. Monomere sowie die Daten zu der damit erhaltenen Dispersion sind in Tabelle 1 aufgeführt. Die Glasübergangstemperatur der Polymere bzw. Polymerzusammensetzungen aus den Beispielen und Vergleichsbeispielen wurde in bekannter Weise mittels Differential Scanning Calorimetry (DSC) bestimmt.

Prüfung des Polymerfilms:

Zur Prüfung der Wasseraufnahme des Polymerfilms wurde der trockene Polymerfilm gewogen und anschließend für 24 h, 48 h und 168 h in Wasser gelegt. Nach der Wasserlagerung wurde der Polymerfilm erneut getrocknet und dessen Gewicht bestimmt. Die Wasseraufnahme wurde mit folgender Formel berechnet:

$$\text{Wasseraufnahme (\%)} =$$

$$[(\text{Gewicht}_{\text{Wasserlagerung}} - \text{Trockengewicht})/\text{Trockengewicht}] \times 100$$

Anwendungstechnische Prüfung:

Herstellung der Prüfkörper:

Ein Vliesstoff aus Polyester-Faser mit einem Flächengewicht von 130 g/m$^2$ wurde mittels Vollbadimprägnierung jeweils mit den wässrigen Dispersionen der Beispiele oder Vergleichsbeispiele ausgerüstet. Das Bindemittel wurde dabei in einer Menge von 20 Gew% Harz, bezogen auf das Flächengewicht des Vlieses, aufgetragen. Dazu wurde das Vlies in der auf 10 % Feststoffgehalt verdünnten Dispersion getränkt, anschließend im Foulard abgequetscht und 3 Minuten lang bei 120°C getrocknet. Aus den so ausgerüsteten Vliesen wurden in Längsrichtung 150 x 50 mm$^2$ große Prüfkörper ausgeschnitten.

Prüfung der Bezugsdehnung (Wärmedehnung):

In einem beheizbaren Zugprüfgerät wurden die Prüfkörper mit einer Einspannlänge von 100 mm eingespannt und bei einer Temperatur von 180°C mit einer Dehnungsgeschwindigkeit von 100 mm/min gedehnt. Es wurde die Dehnung der Vliese bei einer angelegten Kraft von 50 N bzw. 100 N bestimmt.

Prüfung der Hydrophobizität durch Messung der Steighöhe

Die Prüfung erfolgte nach der Methode gemäß DIN 53924, wobei den analog obigem Verfahren ausgerüsteten Vliesen Probekörper mit einer Länge von 250 mm und einer Breite von 30 mm entnommen wurden. Die Probekörper wurden senkrecht, parallel zu einem Meßstab, über eine Schale mit gefärbtem Wasser aufgehängt und das untere Ende der Proben in das Wasser abgesenkt. Die Steighöhe wurde nach 24 Stunden an den Meßstäben abgelesen.
Die Testergebnisse sind in Tabelle 1 zusammengefaßt.
Bsp. 1 und 2 zeigen, daß mit der EVA-Dispersion alleine kein harter hydrophober Binder für Dachbahnen hergestellt werden kann (Steighöhe > 0, Bezugsdehnung zu hoch!) und zusätzlich die Styrol-Acrylsäure-haltige Polymerkomponente b) benötigt wird (Beispiele 3, 4, 5, 6, 7, 8).

Die Vergleichsbeispiele 1 und 2 zeigen, daß bei geringen Acrylsäuremengen in der zweiten Polymerkomponente b) die Wasseraufnahme zu hoch wird.

Die Beispiele 3, 4 und 5 zeigen, daß mit zunehmenden Acrylsäuremengen die Polymerverträglichekit zunimmt (Tg der Weichphase steigt), und daß ferner die Wasseraufnahme des Polymerfilms überraschend abnimmt und die Bezugsdehnung (wie für den Dachbahnenbinder gewünscht) ebenfalls abnimmt.

Die Beispiele 6, 7 und 8 zeigen weiterhin den Einfluß von Nachvernetzermonomeren auf die Eigenschaften der erfindungsgemäßen Dachbinder.

Die Vergleichsbeispiele 3 und 4 reflektieren den technischen Stand der Pfropfpolymeren aus der US-A 4683165 und der EP-A 358007. Das Vergleichsbeispiel 3 zeigt, daß ohne die erfindungsgemäße Acrylsäure in Polymerphase b) trotz des Einsatzes von Nachvernetzermonomeren keine gute Bezugsdehnung erzielt werden kann.

Tabelle 1

| Beispiel | Pfropfbasis (Bsp./GewT) | Styrol (GewT) | AS (GewT) | NMA (GewT) | Tg (°C) | $H_2O$-Aufnahme Polymer (%) | | | Steighöhe (mm) | Bezugsdehnung 50N (%) | 100N (% |
|---|---|---|---|---|---|---|---|---|---|---|---|
| | | | | | | 24h | 48h | 168h | | | |
| Bsp. 1* | 1 / 100 | − | − | − | -17.9 | | | | 2 | 31.5 | 61.0 |
| Bsp. 2* | 2 / 100 | − | − | − | -15.8 | | | | 2 | 28.9 | 57.1 |
| Bsp. 3 | 1 / 70 | 25.5 | 4.5 | − | 1.5 | 23.7 | 24.7 | 34.3 | 0 | 38.7 | 72.0 |
| Bsp. 4 | 1 / 60 | 34.0 | 6.0 | − | 13.4 | 12.3 | 12.3 | 14.0 | 0 | 25.2 | 67.0 |
| Bsp. 5 | 1 / 50 | 42.5 | 7.5 | − | 29.7 | 8.3 | 8.4 | 9.5 | 0 | 20.9 | 62.5 |
| Bsp. 6 | 1 / 49 | 42.5 | 7.5 | 1.0 | 26.3 | 8.2 | 8.5 | 9.3 | 0 | 11.6 | 52.8 |
| Bsp. 7 | 2 / 49 | 42.5 | 7.5 | 1.0 | 27.3 | 9.1 | 9.3 | 9.9 | 0 | 24.9 | 54.1 |
| Bsp. 8 | 2 / 48 | 42.5 | 7.5 | 2.0 | 20.8 | 8.7 | 9.1 | 9.5 | 0 | 22.0 | 52.7 |
| Vbsp. 1 | 1 / 90 | 8.5 | 1.5 | − | -12.5** | 24.1 | 40.0 | 91.4 | 4 | 33.4 | 62.6 |
| Vbsp. 2 | 1 / 80 | 17.0 | 3.0 | − | -7.0** | 33.2 | 9.0 | 92.3 | 2 | 41.0 | n.m. |
| Vbsp. 3 | 2 / 50 | 48.0 | − | 2.0 | -12.1** | nicht bestimmt | | | 2 | 36.6 | 66.4 |
| Vbsp. 4 | 2 / 50 | 50.0 | − | − | -13.1** | nicht bestimmt | | | 2 | 32.0 | 70.3 |

* Beispiel 1 und Beispiel 2 sind keine erfindungsgemäßen Textilbinder, sondern entsprechen der reinen Komponente a) (Vinylacetat-Ethylen-Copolymer).

** Material zweiphasig; angegeben ist jeweils die Tg der Weichphase

EP 0 975 831 B1

**Patentansprüche**

1. Verwendung einer verträglichen Polymerzusammensetzung als Binde- und Beschichtungsmittel für textile Flächengebilde, welche im Dachbahnenbereich zur Anwendung kommen, dadurch gekennzeichnet, daß die Polymerkombination zusammengesetzt ist aus

   a) 30 bis 95 Gew% eines Vinylacetat-Ethylen-Copolymers mit 5 bis 40 Gew% Ethylen und 0 bis 15 Gew% ein oder mehrere Comonomereinheiten aus der Gruppe der ethylenisch ungesättigten hydrolisierbaren Silane, der N-Methylol(meth)acrylamide und deren N-(Alkoxymethyl)- und (N-Acyloxymethyl)-Derivate, der ethylenisch ungesättigten Carbonsäuren und Sulfonsäuren und deren Derivate, jeweils bezogen auf das Gesamtgewicht des Vinylacetat-Ethylen-Copolymers, und
   b) 5 bis 70 Gew% eines Styrol-Acrylsäure-Copolymers mit 5 bis 35 Gew% Acrylsäure und 0 bis 15 Gew% ein oder mehrere Comonomereinheiten aus der Gruppe der N-Methylol(meth)acrylamide und deren N-(Alkoxymethyl)- und (N-Acyloxymethyl)-Derivate, der ethylenisch ungesättigten Carbonsäurederivate und der ethylenisch ungesättigten Sulfonsäuren und deren Derivate, jeweils bezogen auf das Gesamtgewicht des Styrol-Acrylsäure Copolymers,

   wobei sich die Anteile von a) und b) auf 100 Gew% aufaddieren.

2. Verwendung nach Anspruch 1, dadurch gekennzeichnet, daß die verträgliche Polymerzusammensetzung aus einem Vinylacetat-Ethylen-Copolymer a) mit 15 bis 35 Gew% Ethylen, 0.5 bis 5 Gew% eines oder mehrerer ethylenisch ungesättigter hydrolisierbarer Silane, 0.5 bis 5 Gew% eines oder mehrerer N-Methylol(meth)acrylamide oder deren Derivate, und aus einem Styrol-Acrylsäure-Copolymer b) mit 5 bis 20 Gew% Acrylsäure und 0.5 bis 5 Gew% eines oder mehrerer N-Methylol(meth)acrylamide oder deren Derivate besteht.

3. Verwendung nach Anspruch 1 oder 2, dadurch gekennzeichnet, daß die verträgliche Polymerzusammensetzung als wässrige Dispersion oder als Pulver verwendet wird.

4. Verwendung nach Anspruch 1 bis 3, dadurch gekennzeichnet, daß die verträgliche Polymerzusammensetzung zur Bindung und Beschichtung von Polyesterspinnvliesen, Zellwollvliesen und Glasfaservliesen verwendet wird.

**Claims**

1. Use of a compatible polymer composition as a binding and coating material for textile sheet materials which are used in the roof membrane sector, characterized in that the polymer combination is composed of

   a) 30 to 95% by weight of vinyl acetate-ethylene copolymer containing 5 to 40% by weight of ethylene and 0 to 15% by weight of one or more comonomer units selected from the group consisting of the ethylenically unsaturated hydrolyzable silanes, the N-methylol(meth)acrylamides and their N-(alkoxymethyl) and (N-acyloxymethyl) derivatives, the ethylenically unsaturated carboxylic acid derivatives and the ethylenically unsaturated sulfonic acids and their derivatives, each based on the total weight of the vinyl acetate-ethylene copolymer, and
   b) 5 to 70% by weight of a styrene-acrylic acid copolymer containing 5 to 35% by weight of acrylic acid and 0 to 15% by weight of one or more comonomer units selected from the group consisting of the N-methylol(meth) acrylamides and their N-(alkoxymethyl) and (N-acyloxymethyl) derivatives, the ethylenically unsaturated carboxylic acids and sulfonic acids and their derivatives, each based on the total weight of the styrene-acrylic acid copolymer,

   the fractions of a) and b) adding up to 100% by weight.

2. Use according to claim 1, characterized in that the compatible polymer composition is comprised of a vinyl acetate-ethylene copolymer a) containing 15 to 35% by weight of ethylene, 0.5 to 5% by weight of one or more ethylenically unsaturated hydrolyzable silanes, 0.5 to 5% by weight of one or more N-methylol(meth)acrylamides or their derivatives, and of a styrene-acrylic acid copolymer b) containing 5 to 20% by weight of acrylic acid and 0.5 to 5% by weight of one or more N-methylol(meth)acrylamides or derivatives thereof.

3. Use according to claim 1 or 2, characterized in that the compatible polymer composition is used in the form of an aqueous dispersion or in the form of a powder.

4. Use according to any of claims 1 to 3, characterized in that the compatible polymer composition is used for binding and coating polyester spunbondeds, viscose staple webs and glass fiber webs.

**Revendications**

1. Utilisation d'une composition polymère compatible en tant que liant et matériau de revêtement pour des structures textiles plates qui sont utilisées dans le domaine de la toiture, caractérisée en ce que la combinaison polymère est composée de

   a) 30 à 95% en poids d'un copolymère d'acétate de vinyle/éthylène comprenant de 5 à 40% en poids d'éthylène et de 0 à 15% en poids d'un ou de plusieurs motifs comonomères parmi le groupe constitué de silanes hydrolysables éthyléniquement insaturés, de N-méthylol(méth)acrylamides et de leurs dérivés N-alcoxyméthylés et N-acyloxyméthylés, d'acides carboxyliques et d'acides sulfoniques éthyléniquement insaturés et de leurs dérivés, dans chaque cas par rapport au poids total du copolymère d'acétate de vinyle/éthylène, et
   b) 5 à 70% en poids d'un copolymère de styrène/acide acrylique comprenant de 5 à 35% en poids d'acide acrylique et de 0 à 15% en poids d'un ou de plusieurs motifs comonomères parmi le groupe constitué de N-méthylol(méth)acrylamides et de leurs dérivés N-alcoxyméthylés et N-acyloxyméthylés, d'acides carboxyliques éthyléniquement insaturés et d'acides sulfoniques éthyléniquement insaturés et de leurs dérivés, dans chaque cas par rapport au poids total du copolymère de styrène/acide acrylique,

   la somme des proportions de a) et b) étant de 100% en poids.

2. Utilisation selon la revendication 1, caractérisée en ce que la composition polymère compatible est constituée d'un copolymère d'acétate de vinyle/éthylène a) comprenant de 15 à 35% en poids d'éthylène, de 0,5 à 5% en poids d'un ou de plusieurs silanes hydrolysables éthyléniquement insaturés, de 0,5 à 5% en poids d'un ou de plusieurs N-méthylol(méth)acrylamides ou de leurs dérivés, et d'un copolymère de styrène/acide acrylique b) comprenant de 5 à 20% en poids d'acide acrylique et de 0,5 à 5% en poids d'un ou de plusieurs N-méthylol(méth)acrylamides ou de leurs dérivés.

3. Utilisation selon la revendication 1 ou 2, caractérisée en ce que la composition polymère compatible est utilisée sous forme de dispersion aqueuse ou de poudre.

4. Utilisation selon les revendications 1 à 3, caractérisée en ce que la composition polymère compatible est utilisée pour lier et revêtir des nappes spunbonded, des nappes de fibranne et des nappes de fibre de verre.